# EUROPEAN PATENT APPLICATION

(11) **EP 2 960 635 A1**
(43) Date of publication of application: **30.12.2015**
(21) Application number: 15172822.7
(22) Date of filing: 19.06.2015
(51) Int. Cl.: G01J 3/44, G01J 9/02, G01N 15/02, G01N 21/45, G01N 21/51

(54) **DYNAMIC LIGHT SCATTERING MEASUREMENT DEVICE AND DYNAMIC LIGHT SCATTERING MEASUREMENT METHOD**

(30) Priority: 20.06.2014 JP 2014127259
(71) Applicant: OTSUKA ELECTRONICS CO., LTD., Hirakata-shi Osaka 573-1132 (JP); National University Corporation Tokyo University of Agriculture and Technology, Fuchu-shi, Tokyo 183-8538 (JP)
(72) Inventor: Izutani, Yusuke, Hirakata-shi, Osaka 573-1132 (JP); Iwai, Toshiaki, Tokyo, 183-8538 (JP)
(74) Representative: MERH-IP Matias Erny Reichl Hoffmann Patentanwälte PartG mbB

(57) **Abstract**

A dynamic light scattering measurement device (1) includes an irradiation section that applies light emitted from a low-coherence light source (10) to a sample (40) that includes particles (42), a spectral intensity acquisition section (62) that disperses reflected light from a reference plane and scattered light from the sample (40) that has passed through the reference plane to acquire a spectral intensity of interference light of the reflected light and the scattered light, the reference plane being situated to intersect an optical path through which the light is applied to the sample, and a measurement section (80) that measures dynamic light scattering of the sample (40) based on the acquired spectral intensity.

## Description

### BACKGROUND OF THE INVENTION

The present invention relates to a dynamic light scattering measurement device and a dynamic light scattering measurement method.

WO2013/077137 discloses a dynamic light scattering measurement device that utilizes a low-coherence light source and a Michelson interferometer. The dynamic light scattering measurement device disclosed in WO2013/077137 acquires the spectral intensity of interference light of reference light and scattered light, and performs a dynamic light scattering measurement based on the acquired spectral intensity, thereby making it unnecessary to perform scanning with a reference mirror (reference plane).

According to the known dynamic light scattering measurement device, however, since the reference light and sample light (scattered light from the sample) propagate through different (independent) optical paths, the effects of a disturbance (e.g., vibrations) easily occur, and it is necessary to adjust the optical path difference between the reference light and the sample light.

### SUMMARY

Several aspects of the invention may provide a dynamic light scattering measurement device and a dynamic light scattering measurement method that suppress the effects of a disturbance (e.g., vibrations), and make it unnecessary to adjust the optical path difference between the reference light and the sample light.

According to a first aspect of the invention, there is provided a dynamic light scattering measurement device including:
an irradiation section that applies light emitted from a low-coherence light source to a sample that includes particles;
a spectral intensity acquisition section that disperses reflected light from a reference plane and scattered light from the sample that has passed through the reference plane to acquire a spectral intensity of interference light of the reflected light and the scattered light, the reference plane being situated to intersect an optical path through which the light is applied to the sample; and
a measurement section that measures dynamic light scattering of the sample based on the acquired spectral intensity.

According to a second aspect of the invention, there is provided a dynamic light scattering measurement method including:
an irradiation step that applies light emitted from a low-coherence light source to a sample that includes particles;
a spectral intensity acquisition step that disperses reflected light from a reference plane and scattered light from the sample that has passed through the reference plane to acquire a spectral intensity of interference light of the reflected light and the scattered light, the reference plane being situated to intersect an optical path through which the light is applied to the sample; and
a measurement step that measures dynamic light scattering of the sample based on the acquired spectral intensity.

### BRIEF DESCRIPTION OF THE SEVERAL VIEWS OF THE DRAWING

FIG. 1 is a diagram illustrating a configuration of a dynamic light scattering measurement device according to a first embodiment of the invention.
FIG. 2 is a schematic diagram illustrating reference light and sample light when employing the configuration illustrated in FIG. 1.
FIG. 3 is a flowchart illustrating a flow of a dynamic light scattering measurement.
FIG. 4A illustrates an example of an image that represents a temporal change in spectral intensity, and FIG. 4B is an enlarged view illustrating the center area of the image illustrated in FIG. 4A.
FIG. 5A is a graph illustrating a spectral intensity that corresponds to one line in the image illustrated in FIG. 4A that extends along the horizontal axis, and FIG. 5B is a graph illustrating a spectral intensity around a center wavelength that corresponds to one line in the image illustrated in FIG. 4B that extends along the horizontal axis.
FIG. 6 is a graph illustrating an intensity that corresponds to the position of each scattering point obtained by performing an inverse Fourier transform on a spectral intensity at one time point.
FIG. 7 is a graph illustrating a temporal change in intensity that corresponds to the position of one scattering point.
FIG. 8 is a graph illustrating a power spectrum obtained by performing a Fourier transform on a temporal change in intensity that corresponds to the position of one scattering point.
FIG. 9 is a graph illustrating an autocorrelation function obtained by performing an inverse Fourier transform on a power spectrum that corresponds to the position of one scattering point.
FIG. 10 is a schematic diagram illustrating a configuration of a dynamic light scattering measurement device according to a second embodiment of the invention.
FIG. 11 is a schematic diagram illustrating reference light and sample light when employing the configuration illustrated in FIG. 10.
FIG. 12 is a schematic diagram illustrating a configuration of a dynamic light scattering measurement device according to a third embodiment of the invention.

### DETAILED DESCRIPTION OF THE EMBODIMENT

(1) According to one embodiment of the invention, there is provided a dynamic light scattering measurement device including:
   an irradiation section that applies light emitted from a low-coherence light source to a sample that includes particles;
   a spectral intensity acquisition section that disperses reflected light from a reference plane and scattered light from the sample that has passed through the reference plane to acquire a spectral intensity of interference light of the reflected light and the scattered light, the reference plane being situated to intersect an optical path through which the light is applied to the sample; and
   a measurement section that measures dynamic light scattering of the sample based on the acquired spectral intensity.

According to another embodiment of the invention, there is provided a dynamic light scattering measurement method including:
an irradiation step that applies light emitted from a low-coherence light source to a sample that includes particles;
a spectral intensity acquisition step that disperses reflected light from a reference plane and scattered light from the sample that has passed through the reference plane to acquire a spectral intensity of interference light of the reflected light and the scattered light, the reference plane being situated to intersect an optical path through which the light is applied to the sample; and
a measurement step that measures dynamic light scattering of the sample based on the acquired spectral intensity.

According to the above embodiments, the reference plane is situated to intersect the optical path through which the light (i.e., light emitted from the low-coherence light source) is applied to the sample, and the reflected light from the reference plane and the scattered light from the sample that has passed through the reference plane are dispersed to acquire the spectral intensity of the interference light of the reflected light and the scattered light. Specifically, since the reference light (i.e., the reflected light from the reference plane) and the sample light (i.e., the scattered light from the sample) propagate through an identical optical path, it is possible to suppress the effects of a disturbance (e.g., vibrations), and it is unnecessary to adjust the optical path difference between the reference light and the sample light.

(2) In the above dynamic light scattering measurement device, the irradiation section may apply the light emitted from the low-coherence light source to the sample through a wall surface of a transparent container that holds the sample, and the reference plane may be the wall surface of the transparent container.

In the above dynamic light scattering measurement method, the irradiation step may apply the light emitted from the low-coherence light source to the sample through a wall surface of a transparent container that holds the sample, and the reference plane may be the wall surface of the transparent container.

The wall surface of the transparent container may be the outer wall surface of the transparent container, or may be the inner wall surface of the transparent container.

According to this configuration, since the wall surface of the transparent container is used as the reference plane when applying the light emitted from the low-coherence light source to the sample through the wall surface of the transparent container that holds the sample to measure the dynamic characteristics of the sample in the vicinity of the solid-liquid interface, the reference light (i.e., the reflected light from the reference plane) and the sample light (i.e., the scattered light from the sample) propagate through an identical optical path. Therefore, it is possible to suppress the effects of a disturbance (e.g., vibrations), and it is unnecessary to adjust the optical path difference between the reference light and the sample light.

(3) In the above dynamic light scattering measurement device, the irradiation section may apply the light emitted from the low-coherence light source, to the sample through a gas-liquid interface of the sample, and the reference plane may be the gas-liquid interface between air and the sample.

In the above dynamic light scattering measurement method, the irradiation step may apply the light emitted from the low-coherence light source to the sample through a gas-liquid interface of the sample, and the reference plane may be the gas-liquid interface between air and the sample.

According to this configuration, since the gas-liquid interface of the sample is used as the reference plane when applying the light emitted from the low-coherence light source to the sample through the gas-liquid interface of the sample (i.e., the surface of the sample) to measure the dynamic characteristics of the sample in the vicinity of the gas-liquid interface, the reference light (i.e., the reflected light from the reference plane) and the sample light (i.e., the scattered light from the sample) propagate through an identical optical path. Therefore, it is possible to suppress the effects of a disturbance (e.g., vibrations), and it is unnecessary to adjust the optical path difference between the reference light and the sample light.

(4) In the above dynamic light scattering measurement device and the above dynamic light scattering measurement method, the reference plane may be provided at an exit-side end of an optical propagation member through which the light emitted from the low-coherence light source propagates.

According to this configuration, since the reference plane is provided at the exit-side end of the optical propagation member through which the light emitted from the low-coherence light source propagates, the reference light (i.e., the reflected light from the reference plane) and the sample light (i.e., the scattered light from the sample) propagate through an identical optical path. Therefore, it is possible to suppress the effects of a disturbance (e.g., vibrations), and it is unnecessary to adjust the optical path difference between the reference light and the sample light.

Several embodiments of the invention will be described in detail below with reference to the drawings.

### First embodiment

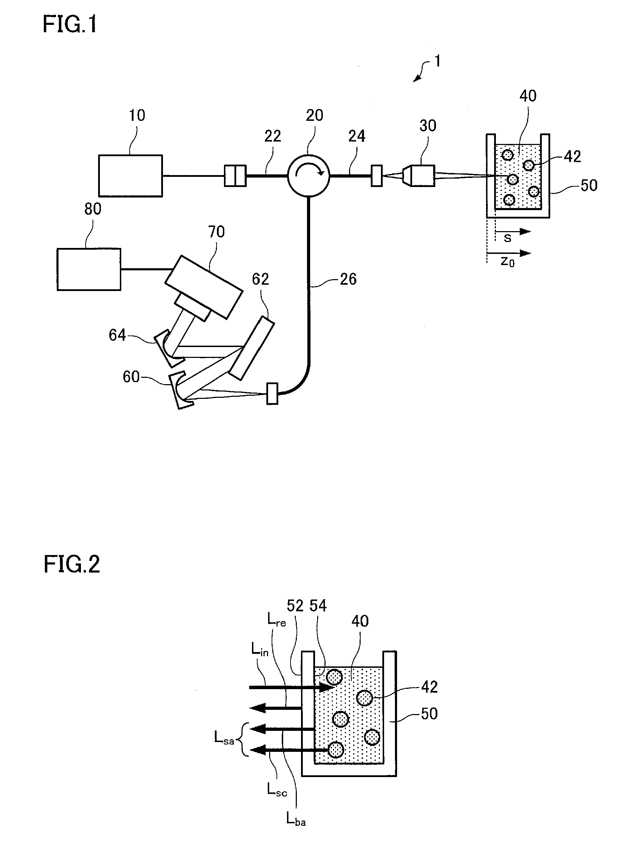

FIG. 1 is a schematic diagram illustrating a configuration of a dynamic light scattering measurement device according to a first embodiment of the invention.

A dynamic light scattering measurement device 1 includes a low-coherence light source 10, an optical circulator 20, an objective lens 30, a diffraction grating 62, a photodetector 70, and a calculation section 80, the objective lens 30 functioning as an irradiation section, the diffraction grating 62 and the photodetector 70 functioning as a spectral intensity acquisition section, and the calculation section 80 functioning as a measurement section.

A superluminescent diode (SLD) is used as the low-coherence light source 10, for example. Note that another low-coherence light source or an ultrashort coherence light source (e.g., white LED) may also be used as the low-coherence light source 10.

The optical circulator 20 is a three-port optical circulator that has a first port to which an optical fiber 22 is connected, a second port to which an optical fiber 24 is connected, and a third port to which an optical fiber 26 is connected. The optical circulator 20 is configured so that light input to the first port is output to the second port, and light input to the second port is output to the third port.

For example, a finite objective lens having a magnification of 10 and a numerical aperture of 0.25 is used as the objective lens 30 so that the outer wall surface of a sample cell 50 and a sample 40 (measurement target range) are included within the depth of focus with respect to the image point. The sample cell 50 is a transparent container that is formed of a material that allows incident light to pass through. The sample cell 50 holds the sample 40 that includes particles 42. A normal rectangular cell made of glass or a transparent resin may be used as the sample cell 50, for example.

The diffraction grating 62, concave mirrors 60 and 64, and the photodetector 70 function as a spectroscope. Although FIG. 1 illustrates an example in which the spectroscope has a Czerny-Turner configuration, the spectroscope may have another configuration. The photodetector 70 is a line sensor camera in which a plurality of light-receiving devices (elements) are arranged in a row.

Light emitted from the low-coherence light source 10 enters the optical circulator 20 through the optical fiber 22. The light that has exited from the optical circulator 20 is incident on the objective lens 30 through the optical fiber 24, and applied to the sample 40 through the wall surface (transparent wall) of the sample cell 50.

FIG. 2 is a schematic diagram illustrating reference light and sample light when employing the configuration illustrated in FIG. 1. When the light (incident light Lᵢₙ) emitted from the low-coherence light source 10 has been applied to the sample 40 through the wall surface of the sample cell 50, scattered light L_{sc} (backscattered light) occurs due to the particles 42 within the sample 40. Part of the incident light Lᵢₙ is reflected by the outer wall surface 52 of the sample cell 50. In the first embodiment, the reflected light from the outer wall surface 52 is used as reference light Lᵣₑ. Specifically, the outer wall surface 52 that intersects the optical path through which light is applied to the sample 40 is used as a reference plane. Note that part of the incident light Lᵢₙ is also reflected by the inner wall surface 54 (i.e., the interface between the sample cell 50 and the sample 40) of the sample cell 50. The scattered light L_{sc} from the sample 40 and the reflected light from the inner wall surface 54 are collectively referred to as "sample light Lₛₐ", and the reflected light from the inner wall surface 54 is referred to as "base light L_{ba}" for convenience of explanation.

Again referring to FIG. 1, the reference light Lᵣₑ (i.e., the reflected light from the reference plane (outer wall surface 52)) and the sample light Lₛₐ (i.e., the scattered light L_{sc} and the base light L_{ba}) enter the optical circulator 20 through the objective lens 30 and the optical fiber 24.

The reference light Lᵣₑ and the sample light Lₛₐ that have exited from the optical circulator 20 pass through the optical fiber 26, are reflected by the concave mirror 60, and are dispersed by the diffraction grating 62. The reference light Lᵣₑ and the sample light Lₛₐ thus dispersed are reflected by the concave mirror 64, enter the photodetector 70, interfere with each other, and are detected as interference light. The photodetector 70 detects the spectral intensity of the interference light. A detection signal (i.e., the spectral intensity of the interference light) detected by the photodetector 70 is output to the calculation section 80.

The calculation section 80 (computer) performs a calculation for measuring dynamic light scattering of the sample 40 based on the spectral intensity of the interference light detected by the photodetector 70. Specifically, the calculation section 80 calculates the intensity that corresponds to the position of each scattering point in the sample 40 based on the detected spectral intensity, calculates the power spectrum that corresponds to the position of each scattering point based on a temporal change in the intensity that corresponds to the position of each scattering point, calculates an autocorrelation function that corresponds to the position of each scattering point based on the calculated power spectrum, and analyzes the calculated autocorrelation function to determine the dynamic characteristics of the sample 40 (e.g., the particle size distribution within the sample 40).

In FIG. 1, z₀ is the distance from the outer wall surface 52 of the sample cell 50 to the center (scattering point) of each particle 42 within the sample 40, and s is the distance from the inner wall surface 54 of the sample cell 50 to each scattering point.

The dynamic light scattering measurement device according to the first embodiment applies light emitted from the low-coherence light source 10 to the sample 40 through the wall surface of the sample cell 50 to measure the dynamic characteristics of the sample 40 in the vicinity of the solid-liquid interface, the dynamic light scattering measurement device being configured so that the reference light Lᵣₑ reflected by the reference plane (i.e., the wall surface (outer wall surface 52) of the sample cell 50) and the sample light Lₛₐ (i.e., the scattered light L_{sc} from the sample 40) that has passed through the reference plane are dispersed to acquire the spectral intensity of the interference light of the reference light Lᵣₑ and the sample light Lₛₐ. Specifically, since the reference light Lᵣₑ and the sample light Lₛₐ propagate through an identical optical path, it is possible to suppress the effects of a disturbance (e.g., vibrations), and it is unnecessary to adjust the optical path difference between the reference light Lᵣₑ and the sample light Lₛₐ.

Note that the inner wall surface 54 of the sample cell 50 may be used as the reference plane instead of the outer wall surface 52 of the sample cell 50, and the reflected light from the inner wall surface 54 may be used as the reference light. In this case, the base light is the same as the reference light.

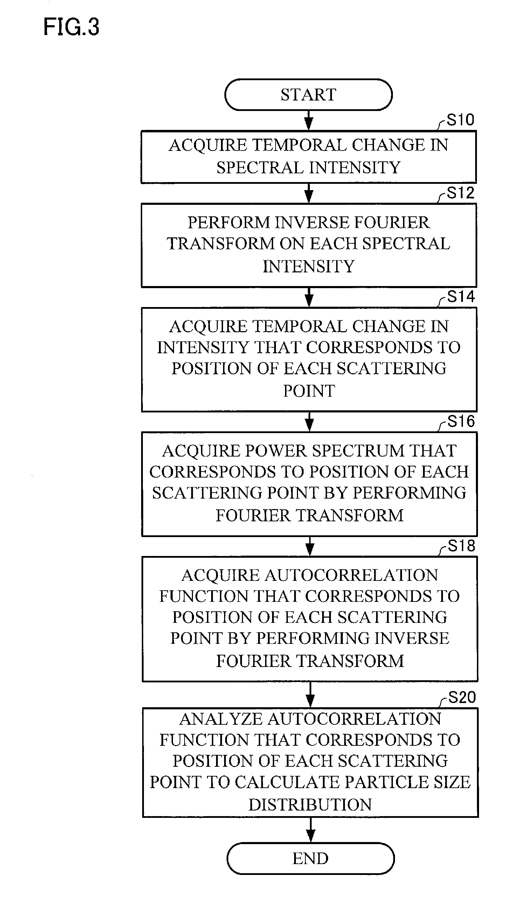

FIG. 3 is a flowchart illustrating a flow of the dynamic light scattering measurement according to the first embodiment. The calculation section 80 acquires a temporal change in the spectral intensity detected by the photodetector 70 as an image (step S10). The calculation section 80 may acquire the image (that represents a temporal change in spectral intensity) a plurality of times (e.g. sixteen times).

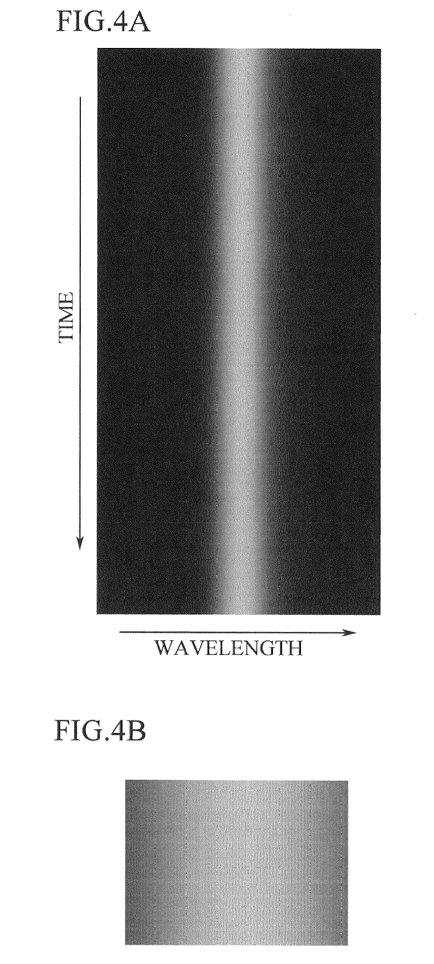

FIG. 4A illustrates an example of an image that represents a temporal change in spectral intensity. A suspension of polystyrene latex particles (radius of particles: 230 nm, volume concentration: 10%) was put in a rectangular cell made of polystyrene, and used as the sample 40. An SLD having a center wavelength of 827 nm and a full width at half maximum of 18 nm was used as the low-coherence light source 10. A line sensor camera (number of pixels: 2048) was used as the photodetector 70, and measurement was continuously performed at a frame rate of 5 kHz to acquire an image. Note that the frame rate is changed corresponding to the size (Brownian motion diffusion rate) of the measurement target particles.

In FIG. 4A, the horizontal axis (2048 pixels) indicates the wavelength of the spectrum, the brightness of the image corresponds to the magnitude of the spectral intensity, and the vertical axis (4096 pixels) indicates time. FIG. 4B is an enlarged view illustrating the center area (around the center wavelength) of the image illustrated in FIG. 4A.

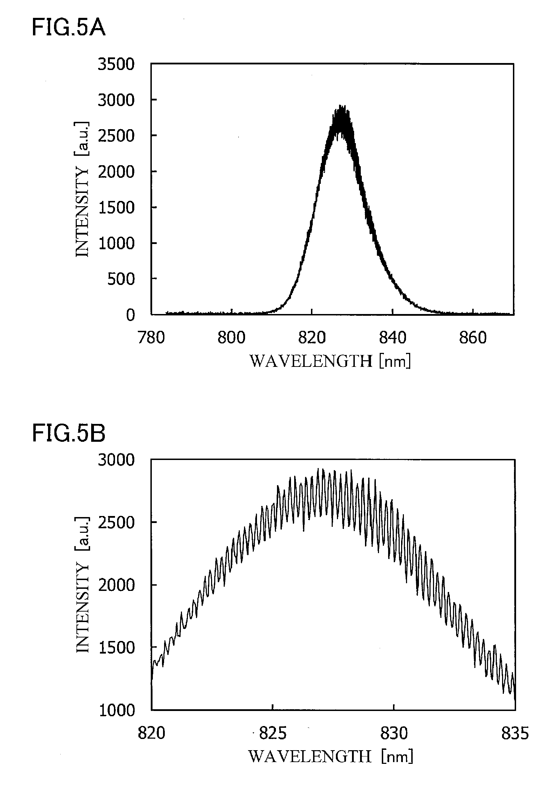

FIG. 5A is a graph illustrating the spectral intensity that corresponds to one line in the image illustrated in FIG. 4A that extends along the horizontal axis, and FIG. 5B is a graph illustrating the spectral intensity around the center wavelength that corresponds to one line in the image illustrated in FIG. 4B that extends along the horizontal axis. In FIGS. 5A and 5B, the horizontal axis indicates the wavelength (nm), and the vertical axis indicates the intensity (arbitrary unit). Interference fringes due to the reference light Lᵣₑ and the base light L_{ba} are observed in FIGS. 4A to 5B. The interference fringes also include a fluctuation component of the scattered light L_{sc} from the sample 40.

The calculation section 80 then performs an inverse Fourier transform on each spectral intensity that changes with time (corresponding to each line in the image illustrated in FIG. 4A that extends along the horizontal axis) (step S12) to acquire a temporal change in the intensity that corresponds to the position of each scattering point (i.e., the distance s from the inner wall surface 54 to each scattering point) within the sample 40 (step S14).

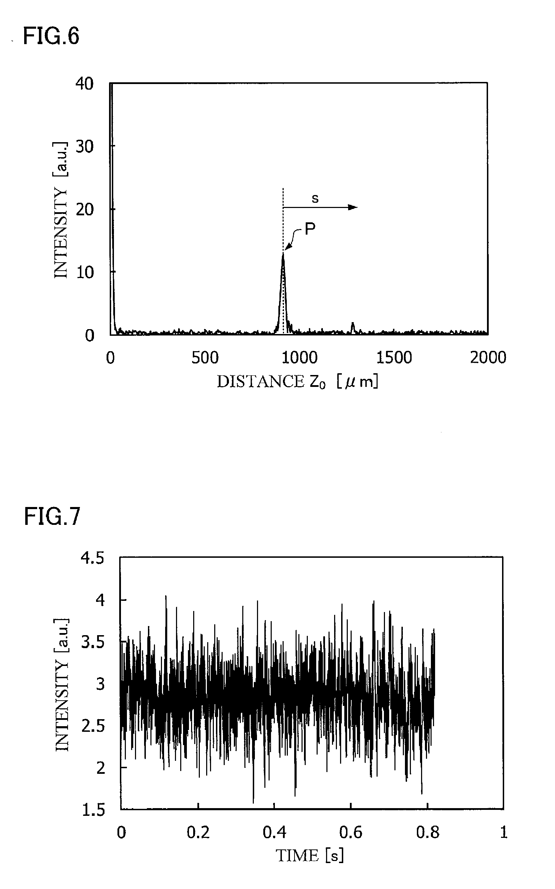

FIG. 6 is a graph illustrating the intensity that corresponds to the position of each scattering point obtained by performing an inverse Fourier transform on the spectral intensity at one time point. In FIG. 6, the horizontal axis indicates the distance z₀ (micrometers) from the outer wall surface 52 in the direction toward the sample, and the vertical axis indicates the intensity (arbitrary unit). In FIG. 6, the peak P is the peak of the interference light of the reference light Lᵣₑ and the base light L_{ba}. An interference signal of the reference light Lᵣₑ and the scattered light L_{sc} is observed at a position (i.e., a position at which the distance s is longer than 0 (s>0)) deeper than the position of the peak P (i.e., a position at which the distance s is 0 (s=0)). A temporal change in the intensity that corresponds to the position of each scattering point can be acquired by calculating the intensity that corresponds to the position of each scattering point (distance s) with respect to each spectral intensity. FIG. 7 is a graph illustrating a temporal change in the intensity that corresponds to the position of one scattering point (at which the distance s is 20 micrometers). In FIG. 7, the horizontal axis indicates time (s), and the vertical axis indicates the intensity (arbitrary unit).

The calculation section 80 then performs a Fourier transform on the temporal change in the intensity that corresponds to the position of each scattering point within the sample 40 to acquire the power spectrum that corresponds to the position of each scattering point (step S16).

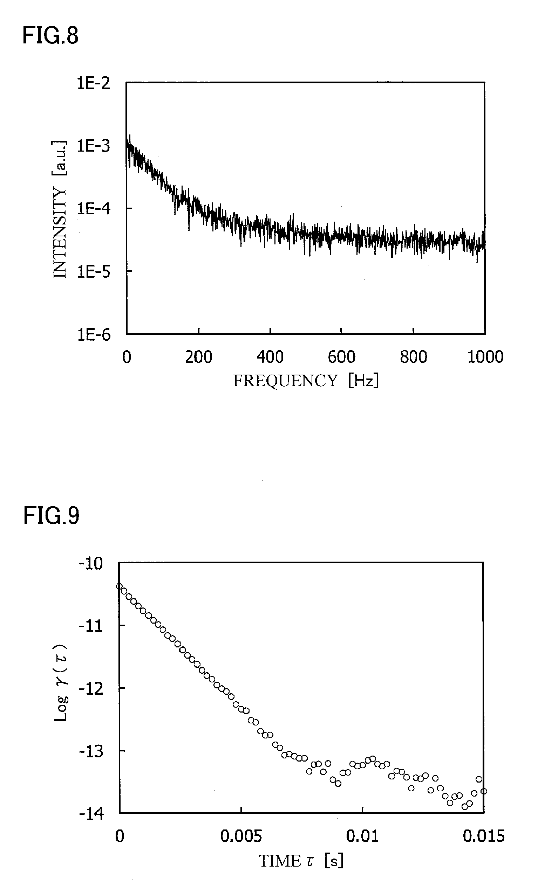

FIG. 8 is a graph illustrating the power spectrum obtained by performing a Fourier transform on the temporal change in the intensity that corresponds to the position of one scattering point. In FIG. 8, the horizontal axis indicates the frequency (Hz), and the vertical axis indicates the intensity (arbitrary unit, logarithmic scale). FIG. 8 shows the statistical average of the power spectrum that corresponds to the position of one scattering point that is obtained by acquiring an image that represents a temporal change in spectral intensity sixteen times in the step S10, and processing the resulting signals that represent a temporal change in the intensity that corresponds to the position of each scattering point.

The calculation section 80 then performs an inverse Fourier transform on the power spectrum that corresponds to the position of each scattering point to acquire the autocorrelation function that corresponds to the position of each scattering point (step S18).

FIG. 9 is a graph illustrating the autocorrelation function obtained by performing an inverse Fourier transform on the power spectrum that corresponds to the position of one scattering point. In FIG. 9, the horizontal axis indicates time (s), and the vertical axis indicates the correlation value (logarithmic scale).

The calculation section 80 then applies a known analytical method (e.g., CONTIN method, cumulant method, or histogram method) used for a dynamic light scattering method to the autocorrelation function that corresponds to the position of each scattering point to calculate the particle size distribution (i.e., the particle size that corresponds to the position of each scattering point) within the sample 40 (step S20).

### Second embodiment

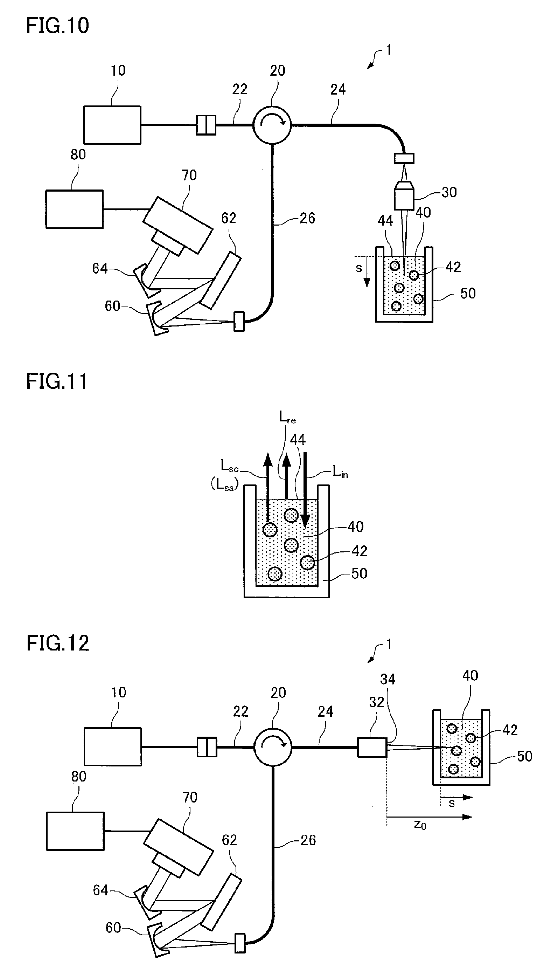

FIG. 10 is a schematic diagram illustrating a configuration of a dynamic light scattering measurement device according to a second embodiment of the invention. In FIG. 10, the same elements as those illustrated in FIG. 1 are indicated by the same reference signs (symbols), and descriptions thereof are appropriately omitted.

The dynamic light scattering measurement device 1 illustrated in FIG. 10 is configured so that light emitted from the low-coherence light source 10 is incident on the objective lens 30 through the optical fiber 22, the optical circulator 20, and the optical fiber 24, and applied vertically to a gas-liquid interface 44 (i.e., the interface between the gaseous atmosphere (air) and the sample 40 (i.e., the surface of the sample 40)) of the sample 40 through an upper opening of the sample cell 50. The sample cell 50 is disposed so that the gas-liquid interface 44 and the sample 40 (measurement target range) are included within the depth of focus (through the objective lens 30) with respect to the image point. In FIG. 10, the distance s (i.e., the distance to the position of each scattering point) is the distance from the gas-liquid interface 44 to each scattering point.

FIG. 11 is a schematic diagram illustrating the reference light and the sample light when employing the configuration illustrated in FIG. 10. When the light (incident light Lᵢₙ) emitted from the low-coherence light source 10 has been applied to the sample 40 through the gas-liquid interface 44, the scattered light L_{sc} (backscattered light) occurs due to the particles 42 within the sample 40. Part of the incident light Lᵢₙ is reflected by the gas-liquid interface 44. In the second embodiment, the reflected light from the gas-liquid interface 44 is used as the reference light Lᵣₑ. Specifically, the gas-liquid interface 44 that intersects the optical path through which light is applied to the sample 40 is used as the reference plane. In this case, the base light is the same as the reference light Lᵣₑ, differing from the first embodiment. The reference light Lᵣₑ (i.e., the reflected light from the reference plane (gas-liquid interface 44)) and the sample light Lₛₐ (i.e., the scattered light L_{sc}) enter the optical circulator 20 through the objective lens 30 and the optical fiber 24. The optical system and the subsequent dynamic light scattering measurement process are otherwise the same as those described above in connection with the first embodiment.

The dynamic light scattering measurement device according to the second embodiment applies light emitted from the low-coherence light source 10 to the sample 40 through the gas-liquid interface 44 to measure the dynamic characteristics of the sample 40 in the vicinity of the gas-liquid interface 44, the dynamic light scattering measurement device being configured so that the reference light Lᵣₑ reflected by the reference plane (i.e., gas-liquid interface 44) and the sample light Lₛₐ (i.e., the scattered light L_{sc} from the sample 40) that has passed through the reference plane are dispersed to acquire the spectral intensity of the interference light of the reference light Lᵣₑ and the sample light Lₛₐ. Specifically, since the reference light Lᵣₑ and the sample light Lₛₐ propagate through an identical optical path in the same manner as described above in connection with the first embodiment, it is possible to suppress the effects of a disturbance (e.g., vibrations), and it is unnecessary to adjust the optical path difference between the reference light Lᵣₑ and the sample light Lₛₐ.

### Third embodiment

FIG. 12 is a schematic diagram illustrating a configuration of a dynamic light scattering measurement device according to a third embodiment of the invention. In FIG. 12, the same elements as those illustrated in FIG. 1 are indicated by the same reference signs (symbols), and descriptions thereof are appropriately omitted.

In the dynamic light scattering measurement device 1 illustrated in FIG. 12, a GRIN lens 32 (gradient-index lens) is connected to the end of the optical fiber 24 that is situated on the side of the sample 40. The GRIN lens 32 is a cylindrical lens that has flat end faces, and has a refractive index distribution in the radial direction. A half mirror 34 (e.g., evaporated metal film) is provided to the exit-side end face of the GRIN lens 32 (i.e., the exit-side end of an optical propagation member). In FIG. 12, the distance z₀ is the distance from the exit-side end face (half mirror 34) of the GRIN lens 32 to the center (scattering point) of each particle 42 within the sample 40.

Light emitted from the low-coherence light source 10 is incident on the GRIN lens 32 through the optical fiber 22, the optical circulator 20, and the optical fiber 24, and applied to the sample 40. Part of the light emitted from the low-coherence light source 10 is reflected by the half mirror 34 provided to the exit-side end face of the GRIN lens 32. In the third embodiment, the reflected light from the half mirror 34 is used as the reference light Lᵣₑ. Specifically, the half mirror 34 that intersects the optical path through which light is applied to the sample 40 is used as the reference plane. The reference light (i.e., the reflected light from the reference plane (half mirror 34)) and the sample light (i.e., the scattered light L_{sc} from the sample 40) enter the optical circulator 20 through the optical fiber 24. The optical system and the subsequent dynamic light scattering measurement process are otherwise the same as those described above in connection with the first embodiment. Although FIG. 12 illustrates an example in which light emitted from the low-coherence light source 10 is applied to the sample 40 through the wall surface of the sample cell 50, light emitted from the low-coherence light source 10 may be applied to the sample 40 through the gas-liquid interface via the opening of the sample cell 50. Note that light emitted from the low-coherence light source 10 may be applied to the sample 40 in a state in which the exit-side end face (half mirror 34) of the GRIN lens 32 comes in contact with the sample 40.

The dynamic light scattering measurement device according to the third embodiment is configured so that the reference plane (half mirror 34) is provided at the exit-side end of the optical propagation member through which light emitted from the low-coherence light source 10 propagates, and the reference light reflected by the reference plane and the sample light (i.e., the scattered light from the sample 40) that has passed through the reference plane are dispersed to acquire the spectral intensity of the interference light of the reference light and the sample light. Specifically, since the reference light and the sample light propagate through an identical optical path in the same manner as described above in connection with the first embodiment, it is possible to suppress the effects of a disturbance (e.g., vibrations), and it is unnecessary to adjust the optical path difference between the reference light and the sample light.

The invention is not limited to the above embodiments. Various modifications and variations may be made of the above embodiments. The invention includes various other configurations substantially the same as the configurations described in connection with the above embodiments (e.g., a configuration having the same function, method, and results, or a configuration having the same objective and effects). The invention also includes a configuration in which an unsubstantial element (part) described in connection with the above embodiments is replaced by another element (part). The invention also includes a configuration having the same effects as those of the configurations described in connection with the above embodiments, or a configuration capable of achieving the same objective as that of the configurations described in connection with the above embodiments. The invention further includes a configuration in which a known technique is added to the configurations described in connection with the above embodiments.

Although the above embodiments have been described taking an example in which the reference light and the scattered light are dispersed using a diffraction grating, the reference light and the scattered light may be dispersed using a prism or the like.

Although only some embodiments of the invention have been described in detail above, those skilled in the art would readily appreciate that many modifications are possible in the embodiments without materially departing from the novel teachings and advantages of the invention. Accordingly, all such modifications are intended to be included within the scope of the invention.

## Claims

1. A dynamic light scattering measurement device comprising:
an irradiation section that applies light emitted from a low-coherence light source to a sample that includes particles;
a spectral intensity acquisition section that disperses reflected light from a reference plane and scattered light from the sample that has passed through the reference plane to acquire a spectral intensity of interference light of the reflected light and the scattered light, the reference plane being situated to intersect an optical path through which the light is applied to the sample; and
a measurement section that measures dynamic light scattering of the sample based on the acquired spectral intensity.

2. The dynamic light scattering measurement device as defined in claim 1,
wherein the irradiation section applies the light emitted from the low-coherence light source to the sample through a wall surface of a transparent container that holds the sample; and
wherein the reference plane is the wall surface of the transparent container.

3. The dynamic light scattering measurement device as defined in claim 1,
wherein the irradiation section applies the light emitted from the low-coherence light source to the sample through a gas-liquid interface of the sample; and
wherein the reference plane is the gas-liquid interface of the sample.

4. The dynamic light scattering measurement device as defined in claim 1,
wherein the reference plane is provided at an exit-side end of an optical propagation member through which the light emitted from the low-coherence light source propagates.

5. A dynamic light scattering measurement method comprising:
an irradiation step that applies light emitted from a low-coherence light source to a sample that includes particles;
a spectral intensity acquisition step that disperses reflected light from a reference plane and scattered light from the sample that has passed through the reference plane to acquire a spectral intensity of interference light of the reflected light and the scattered light, the reference plane being situated to intersect an optical path through which the light is applied to the sample; and
a measurement step that measures dynamic light scattering of the sample based on the acquired spectral intensity.

6. The dynamic light scattering measurement method as defined in claim 5,
wherein the irradiation step applies the light emitted from the low-coherence light source to the sample through a wall surface of a transparent container that holds the sample; and
wherein the reference plane is the wall surface of the transparent container.

7. The dynamic light scattering measurement method as defined in claim 5,
wherein the irradiation step applies the light emitted from the low-coherence light source to the sample through a gas-liquid interface of the sample; and
wherein the reference plane is the gas-liquid interface of the sample.

8. The dynamic light scattering measurement method as defined in claim 5,
wherein the reference plane is provided at an exit-side end of an optical propagation member through which the light emitted from the low-coherence light source propagates.
